# EUROPÄISCHE PATENTSCHRIFT

(11) **EP 1 854 608 B1**
(45) Veröffentlichungstag und Bekanntmachung des Hinweises auf die Patenterteilung: **23.09.2009**
(21) Anmeldenummer: 07002373.4
(22) Anmeldetag: 03.02.2007
(51) Int. Cl.: B29B 13/02, H05B 3/00, B29C 51/42

(54) **Heizstation**
Heating station
Poste de chauffage

(30) Priorität: 11.05.2006 DE 102006022263
(43) Veröffentlichungstag der Anmeldung: 14.11.2007
(73) Patentinhaber: UHLMANN PAC-SYSTEME GmbH & Co. KG, 88471 Laupheim (DE)
(72) Erfinder: Matzenmüller, Jürgen, 88416 Bellamont (DE); Knüppel, Jörg, 88477 Schwendi (DE); Gertitschke, Detlev, Dipl.-Ing., 88471 Laupheim (DE)
(74) Vertreter: Wächter, Jochen

(56) Entgegenhaltungen:
- DE-A1- 19 743 157
- US-A- 4 605 839

## Beschreibung

Die Erfindung betrifft eine Heizstation für eine insbesondere kontinuierlich laufende Thermoformmaschine zur Bearbeitung von Folien, insbesondere Kunststofffolien, mit mindestens einem der Folie zuweisenden Emitter zur Emission von Wärmestrahlung, mit einem den Emitter auf der von der Folie abgewandten Seite und seitlich kapselnden Gehäuse und einem auf der dem Emitter gegenüberliegenden Seite der Folie angeordneten Reflektor.

Derartige Heizstationen dienen dazu, in Thermoformmaschinen die zu verarbeitende, insbesondere in einer Formstation zu verformende Folie auf die Verformtemperatur zu erwärmen. Als Randbedingung ist dabei zu beachten, dass die Erwärmung schnell erfolgen soll, um nicht als limitierendes Glied beschränkend auf die Arbeitsgeschwindigkeit zu wirken, dabei aber eine sichere Betriebsweise stets eingehalten werden muss auch unter erschwerten Bedingungen. Wird die Thermoformmaschine beispielsweise in der Pharmaindustrie in sogenannten Reinräumen eingesetzt, muss eine Überhitzung der Folie sicher vermieden werden, um die Freisetzung von Dämpfen oder Qualm bei einer Überhitzung der Folie zu vermeiden.

DE 197 43 157 A offenbart eine Heizstation gemäß dem Oberbegriff des Anspruchs 1. Die US 4 605 839 A offenbart einen Reflektor mit einer Kühlvorrichtung zur Erhöhung der Effizienz.

Der Erfindung liegt daher die Aufgabe zugrunde, eine Heizstation der eingangs genannten Art so auszubilden, dass auch bei einem Ausfall der der Heizstation zugeordneten bekannten Sicherungssysteme eine Überhitzung der Folie vermieden wird.

Diese Aufgabe wird nach der Erfindung bei einer Heizstation der eingangs genannten Art dadurch gelöst, dass der Reflektor mit einer Kühleinrichtung thermisch verbunden ist und die Bahn der Folie zwischen dem Reflektor und dem Emitter mit dem Gehäuse mit einem Neigungswinkel geneigt zur Vertikalen verläuft und der Reflektor unterhalb der Folie platziert ist.

Diese Gestaltung bietet den besonderen Vorteil, dass selbst bei einem Ausfall der Sicherungssysteme, die trotz vielfältiger redundanter Sicherung auf der Hardware-und Softwareseite nicht über die gesamte Lebensdauer der Heizstation ein Zerreißen der Folie ausschließen können, diese Folie im Falle des Eintritts einer derartigen Störung auf den gekühlten Reflektor fällt, so dass das Zusammenwirken der Neigung des Bahnlaufs zusammen mit dem unterhalb der Folie angeordneten gekühlten Reflektor ein weiter gesteigertes Maß an Sicherheit bietet. Darüber hinaus bietet der Reflektor den zusätzlichen Vorteil, dass die zur Erwärmung der Folie erforderliche Leistung reduziert werden kann, da auch das durch die Folie transmittierte Licht erneut auf die Folie eingestrahlt wird.

Eine weitere Steigerung der Leistungsfähigkeit der Heizstation erreicht man, wenn das Gehäuse auf der Innenoberfläche als Gegenreflektor ausgebildet ist, so dass wiederholt das durch die Folie transmittierte Licht auf diese zurückgespiegelt werden kann, bis eine nahezu vollständige Ausnutzung der von dem Emitter ausgesandten Strahlungsenergie erreicht ist, also die Folie fiktiv eine über ihre tatsächliche Dicke hinausgehende Absorptionsdicke aufweist. Darüber hinaus ist anzumerken, dass durch das Gehäuse sowie den Reflektor eine nahezu vollständige Kapselung des Emitters erreicht ist und insoweit für die Nutzer als Bedienpersonal nur eine kühle Außenseite vorliegt, die keine Verletzungsgefahr darstellt.

Um eine hohe Effektivität zu erreichen, bietet es sich an, wenn der Reflektor und/oder der Gegenreflektor mit einer Schicht hohen Reflektionsvermögens beschichtet ist. Dabei ist es im Sinne einer großen Lebensdauer günstig, wenn die Schicht aus Gold oder Silber besteht, wobei im Falle einer auf Silber gefallenen Wahl zusätzlich eine Schutzschicht zur Verhinderung einer Korrosion vorgesehen ist.
Im Hinblick auf eine möglichst leichte Ausführungsform, die dennoch den im Arbeitsbetrieb auftretenden Belastungen Stand hält, ist es bevorzugt, wenn der Reflektor und/oder der Gegenreflektor aus Aluminium, vorzugsweise poliertes AlMg₃ besteht. Alternativ besteht auch die Möglichkeit, dass der Reflektor und/oder der Gegenreflektor aus beschichtetem Glas besteht.
Um im Falle einer Störung mit dem nötigen Maß an Verlässlichkeit unter der Wirkung der Schwerkraft ein Fallen der Folie auf den Reflektor zu erzielen, ist es günstig, wenn der Neigungswinkel eine Größe zwischen +45° bis -45°, vorzugsweise +15° und -15° besitzt. Zur Prozesskontrolle ist vorgesehen, dass bezogen auf die Folienlaufrichtung stromab von dem Gehäuse ein Pyrometer angeordnet ist, mit dem die Folientemperatur nach der Erwärmung gemessen wird. Diese Temperaturmessung dient zur Prozessüberwachung und zur Regelung des Emitters. Um dabei die Temperaturmessung über die gesamte Folienbreite durchführen zu können, ist das Pyrometer quer zur Folienlaufrichtung verstellbar. Zur Erhöhung der Leistung erhöhen und um damit insbesondere bei einer kontinuierlich laufenden Folie die Einwirkzeit zu reduzieren, ist der Emitter mehrfach vorgesehen in einer parallel zur Folienlaufrichtung orientierten Reihung. Der Emitter ist dabei als IR-Heizstrahler gebildet mit einem Maximum emittierter Energie bei einer Wellenlänge zwischen 0,5 und 10 µm, wobei das Maximum emittierter Energie für die üblichen Kunststofffolien optimiert ist.

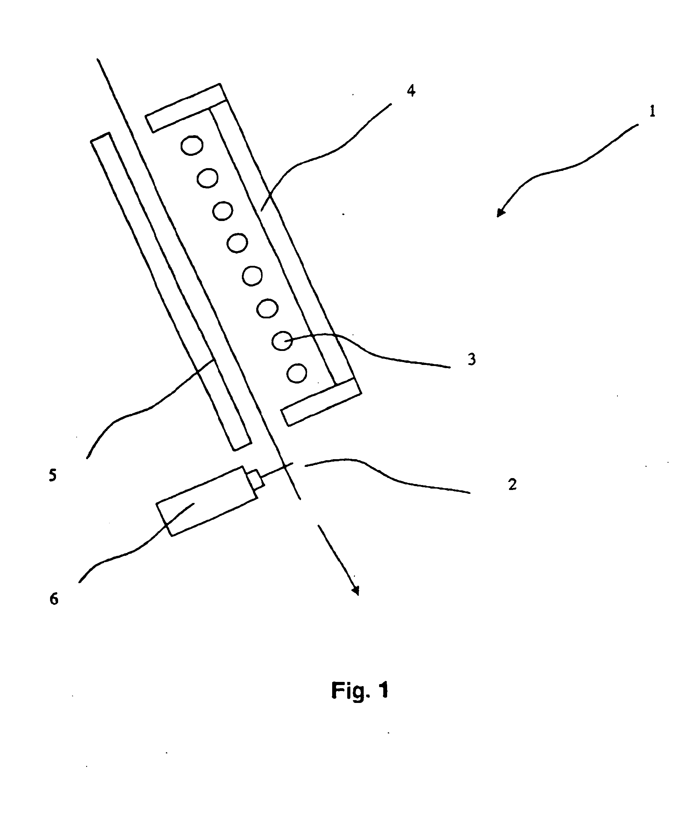

Im folgenden wird die Erfindung an einem in der Zeichnung dargestellten Ausführungsbeispiel näher erläutert; die einzige Figur 1 zeigt in einer schematischen, vereinfachten Darstellung die an dem Gehäuse mit den Emittern und dem Reflektor vorbeigeführte Folie.

In der Zeichnung ist stark vereinfacht eine Heizstation 1 für eine kontinuierlich laufende Thermoformmaschine zur Bearbeitung von Folien 2 dargestellt. Diese Heizstation 1 umfasst dabei eine Mehrzahl von als IR-Heizstrahler gebildeten Emitter 3, die in einer parallel zur Folienlaufrichtung (Pfeil) orientierten Reihung innerhalb eines Gehäuses 4 angeordnet sind und zur Emission von Wärmestrahlung dienen, durch die die Folie 2 zur Vorbereitung einer in einer nachfolgenden Formstation zur erfolgenden Verformung auf die Verformtemperatur erhitzt werden soll.

Besonders zu beachten ist dabei, dass auf der zu dem Emitter 3 gegenüberliegenden Seite der Folie 2 ein Reflektor 5 angeordnet ist und die Bahn der Folie 2 zwischen dem Reflektor 5 und dem Emitter 3 mit dem Gehäuse 4 mit einem Neigungswinkel geneigt zur Vertikalen verläuft. Der Neigungswinkel besitzt eine Größe zwischen +45° bis -45°. Die Figur 1 zeigt weiterhin, dass der Reflektor 5 unterhalb der Folie 2 platziert ist. Außerdem ist der Reflektor 5 mit einer in der Zeichnung nicht dargestellten Kühleinrichtung thermisch verbunden, so dass im Falle einer Störung, die mit einer Beschädigung oder sogar einem Zerreißen der Folie 2 verbunden ist, die beschädigten Folienteile unter der Wirkung der Schwerkraft auf den gekühlten Reflektor 5 fallen, so dass der Reflektor 5 ein gesteigertes Maß an Sicherheit bietet. Für den Normalbetrieb bietet der Reflektor 5 den Vorteil, dass eine reduzierte Leistung ausreicht, um die Folie 2 auf die erforderliche Verformtemperatur zu erwärmen Die vielfache Reflektion der von dem Emitter 3 ausgesandten Wärmestrahlung wird dabei besonders gefördert, wenn das Gehäuse 4 auf der Innenoberfläche als Gegenreflektor ausgebildet ist.

Dabei besteht die Möglichkeit, dass der Reflektor 5 und/oder der Gegenreflektor aus Aluminium, insbesondere polierten Aluminium bestehen. Dabei kann statt einer Verbesserung des Reflektionsvermögens durch Polieren auch vorgesehen sein, dass eine Schicht hohen Reflexionsvermögens aufgetragen wird.

Weiterhin ist der Figur 1 zu entnehmen, dass bezogen auf die Folienlaufrichtung stromab von dem Gehäuse ein Pyrometer 6 angeordnet ist, das quer zur Folienlaufrichtung verstellbar ist.

## Patentansprüche

1. Heizstation für eine insbesondere kontinuierlich laufende Thermoformmaschine zur Bearbeitung von Folien (2), insbesondere Kunststofffolien, mit mindestens einem der Folie (2) zuweisenden Emitter (3) zur Emission von Wärmestrahlung, mit einem den Emitter (3) auf der von der Folie (2) abgewandten Seite und seitlich kapselnden Gehäuse (4) und einem auf der dem Emitter (3) gegenüberliegenden Seite der Folie (2) angeordneten Reflektor (5), **dadurch gekennzeichnet, dass** der Reflektor (5) mit einer Kühleinrichtung thermisch verbunden ist und die Bahn der Folie (2) zwischen dem Reflektor (5) und dem Emitter (3) mit dem Gehäuse (4) mit einem Neigungswinkel geneigt zur Vertikalen verläuft und der Reflektor (5) unterhalb der Folie (2) platziert ist.

2. Heizstation nach Anspruch 1, **dadurch gekennzeichnet, dass** das Gehäuse (4) auf der Innenoberfläche als Gegenreflektor gebildet ist.

3. Heizstation nach Anspruch 1 oder 2, **dadurch gekennzeichnet, dass** der Reflektor (5) und/oder der Gegenreflektor mit einer Schicht hohen Reflexionsvermögens beschichtet ist.

4. Heizstation nach Anspruch 3, **dadurch gekennzeichnet, dass** die Schicht aus Gold oder Silber besteht.

5. Heizstation nach Anspruch 4, **dadurch gekennzeichnet, dass** die Schicht aus Silber mit einer Schutzschicht zur Verhinderung einer Korrosion überzogen ist.

6. Heizstation nach einem der Ansprüche 1 bis 5, **dadurch gekennzeichnet, dass** der Reflektor (5) und/oder der Gegenreflektor aus Aluminium, vorzugsweise poliertes AlMg₃ besteht.

7. Heizstation nach einem der Ansprüche 3 bis 5, **dadurch gekennzeichnet, dass** der Reflektor (5) und/oder der Gegenreflektor aus beschichtetem Glas besteht.

8. Heizstation nach einem der Ansprüche 1 bis 7, **dadurch gekennzeichnet, dass** der Neigungswinkel eine Größe zwischen +45° bis -45°, vorzugsweise zwischen +15° und -15° besitzt.

9. Heizstation nach einem der Ansprüche 1 bis 8, **dadurch gekennzeichnet, dass** bezogen auf die Folienlaufrichtung stromab von dem Gehäuse (4) ein Pyrometer (6) angeordnet ist.

10. Heizstation nach Anspruch 9, **dadurch gekennzeichnet, dass** das Pyrometer (6) quer zur Folienlaufrichtung verstellbar ist.

11. Heizstation nach einem der Ansprüche 1 bis 10, **dadurch gekennzeichnet, dass** der Emitter (3) mehrfach vorgesehen ist in einer parallel zur Folienlaufrichtung orientierten Reihung.

12. Heizstation nach einem der Ansprüche 1 bis 11, **dadurch gekennzeichnet, dass** der Emitter (3) als IR-Heizstrahler gebildet ist mit einem Maximum emittierter Energie bei einer Wellenlänge zwischen 0,5 und 10 µm.

## Claims

1. Heating station, in particular for a continuously running thermoforming machine for processing films (2), in particular plastics material films, comprising at least one emitter (3) facing the film (2) for emitting thermal radiation, comprising a housing (4) which surrounds the emitter (3) laterally and on its side remote from the film (2), and comprising a reflector (5) arranged on the side of the film (2) opposite the emitter (3), **characterised in that** the reflector (5) is thermally connected to a cooling means and the path of the film (2) extends between the reflector (5) and the emitter (3) with the housing (4), inclined at an angle of inclination to the vertical, and the reflector (5) is arranged below the film (2).

2. Heating station according to claim 1, **characterised in that** the housing (4) is formed on its inner surface as a counter-reflector.

3. Heating station according to either claim 1 or claim 2, **characterised in that** the reflector (5) and/or the counter-reflector is/are covered with a highly reflective layer.

4. Heating station according to claim 3, **characterised in that** the layer consists of gold or silver.

5. Heating station according to claim 4, **characterised in that** the layer made of silver is coated with a protective layer to prevent corrosion.

6. Heating station according to any one of claims 1 to 5, **characterised in that** the reflector (5) and/or the counter-reflector consists of aluminium, preferably polished AlMg₃.

7. Heating station according to any one of claims 3 to 5, **characterised in that** the reflector (5) and/or the counter-reflector consists of coated glass.

8. Heating station according to any one of claims 1 to 7, **characterised in that** the angle of inclination is between +45° and -45°, preferably between +15° and -15°.

9. Heating station according to any one of claims 1 to 8, **characterised in that** a pyrometer (6) is arranged downstream from the housing (4), based on the direction of travel of the film.

10. Heating station according to claim 9, **characterised in that** the pyrometer (6) can be adjusted transverse to the direction of travel of the film.

11. Heating station according to any one of claims 1 to 10, **characterised in that** a plurality of emitters (3) is provided in a row which is oriented parallel to the direction of travel of the film.

12. Heating station according to any one of claims 1 to 11, **characterised in that** the emitter (3) is formed as an IR radiant heater having maximum emitted energy at a wavelength between 0.5 and 10 µm.

## Revendications

1. Poste de chauffage pour une machine de thermoformage fonctionnant en particulier en continu destinée au traitement de feuilles (2), en particulier de feuilles en matière plastique, comprenant au moins un émetteur (3) orienté vers la feuille (2) pour l'émission de rayonnement thermique, un carter (4) qui blinde l'émetteur (3) latéralement et sur le côté opposé à la feuille (2), et un réflecteur (5) disposé sur le côté de la feuille (2) en vis-à-vis de l'émetteur (3), **caractérisé en ce que** le réflecteur (5) est relié thermiquement à un dispositif de refroidissement et la nappe de feuille (2) s'étend entre le réflecteur (5) et l'émetteur (3) pourvu du carter (4) avec un angle d'inclinaison par rapport à la verticale et le réflecteur (5) est placé au-dessous de la feuille (2).

2. Poste de chauffage suivant la revendication 1, **caractérisé en ce que** le carter (4) est formé sur la surface intérieure sous forme de réflecteur antagoniste.

3. Poste de chauffage suivant l'une des revendications 1 et 2, **caractérisé en ce que** le réflecteur (5) et/ou le réflecteur antagoniste sont revêtus d'une couche d'un pouvoir de réflexion élevé.

4. Poste de chauffage suivant la revendication 3, **caractérisé en ce que** la couche se compose d'or ou d'argent.

5. Poste de chauffage suivant la revendication 4, **caractérisé en ce que** la couche d'argent est revêtue d'une couche de protection pour empêcher une corrosion.

6. Poste de chauffage suivant l'une des revendications 1 à 5, **caractérisé en ce que** le réflecteur (5) et/ou le réflecteur antagoniste se composent d'aluminium, de préférence d'AlMg₃ poli.

7. Poste de chauffage suivant l'une des revendications 3 à 5, **caractérisé en ce que** le réflecteur (5) et/ou le réflecteur antagoniste se composent de verre revêtu.

8. Poste de chauffage suivant l'une des revendications 1 à 7, **caractérisé en ce que** l'angle d'inclinaison est compris entre + 45° et - 45°, de préférence entre + 15° et - 15°.

9. Poste de chauffage suivant l'une des revendications 1 à 8, **caractérisé en ce qu'**un pyromètre (6) est disposé en aval du carter (4) par rapport à la direction de défilement de la feuille.

10. Poste de chauffage suivant la revendication 9, **caractérisé en ce que** le pyromètre (6) est ajustable transversalement à la direction de défilement de la feuille.

11. Poste de chauffage suivant l'une des revendications 1 à 10, **caractérisé en ce que** l'émetteur (3) est prévu de façon multiple en une rangée orientée parallèlement à la direction de défilement de la feuille.

12. Poste de chauffage suivant l'une des revendications 1 à 11, **caractérisé en ce que** l'émetteur (3) est formé sous forme d'émetteur radiant, avec un maximum d'énergie émise pour une longueur d'onde comprise entre 0,5 et 10 µm.
